# EUROPÄISCHE PATENTSCHRIFT

(11) **EP 0 668 694 B1**
(45) Veröffentlichungstag und Bekanntmachung des Hinweises auf die Patenterteilung: **27.09.2000**
(21) Anmeldenummer: 95101816.7
(22) Anmeldetag: 10.02.1995
(51) Int. Cl.: H04N 5/225

(54) **Schutzgehäuse für optische Geräte mit vereinfachtem elektrischen Anschluss**
Protective housing for optical devices with simplified electrical connection
Boîtier de protection pour appareils optiques avec branchement électrique simplifié

(30) Priorität: 22.02.1994 DE 4405626
(43) Veröffentlichungstag der Anmeldung: 23.08.1995
(73) Patentinhaber: VIDEOR TECHNICAL E. HARTIG GmbH, 63322 Rödermark (DE)
(72) Erfinder: Bernhardt, Rainer, D-61191 Rosbach (DE)
(74) Vertreter: Zapfe, Hans, Dipl.-Ing.

(56) Entgegenhaltungen:
- EP-A- 0 285 922
- DE-C- 4 008 338
- FR-A- 2 553 957
- US-A- 4 414 576
- PATENT ABSTRACTS OF JAPAN vol. 014, no. 245 (P-1052), 24.Mai 1990 & JP 02 064530 A (MATSUSHITA ELECTRIC IND CO LTD), 5.März 1990,

## Beschreibung

Die Erfindung betrifft ein Schutzgehäuse für optische Geräte, insbesondere für Video-Überwachungskameras, mit einem rohrförmigen Gehäusemantel, einer Rückwand mit Mitteln für die Ein- oder Durchführung von elektrischen Leitungen, mit einem inneren Geräteträger und mit einem äußeren Gehäuseträger, die oberhalb und unterhalb des Gehäusemantels in einem festen Abstand parallel zueinander gehalten sind.

Derartige Schutzgehäuse sind durch die DE-PS 40 08 338 und die DE-PS 40 08 340 der gleichen Anmelderin bekannt. In beiden Fällen sind der im Gehäuseinnern angeordnete Geräteträger und der unterhalb des Gehäuses angeordnete Gehäuseträger unmittelbar mit der Rückwand verschraubt. Der Gehäuseträger ist etwa unterhalb des Schwerpunkts der gesamten Anordnung auf einer Konsole und/oder auf einem Schwenk-Neige-Kopf befestigt, so daß das Gehäuse auch ferngesteuert bewegt werden kann. Dabei läßt sich der Gehäusemantel nach dem Lösen der Rückwand-Verschraubung zusammen mit dem Frontrahmen und dem Sichtfenster teleskopartig aus dem Spalt zwischen Geräteträger und Gehäuseträger herausziehen, wobei allerdings das optische Gerät, in der Regel eine Video-Überwachungskamera, an Ort und Stelle verbleibt. Will man zu Reparatur- oder Wartungszwecken das optische Gerät zusammen mit dem Gehäuse demontieren, so müssen zahlreiche elektrische Anschlüsse gelöst werden, die zur Stromversorgung, zu Steuerungszwecken oder zur Signalübertragung benötigt werden. Speziell die DE-PS 40 08 340 zeigt die recht umständliche Leitungsführung.

Verwendet man bei derartigen Schutzgehäusen für die Kabeleinführung sogenannte Stopf-Buchs-Verschraubungen, so ergibt sich sowohl bei der Montage als auch bei der Demontage ein zeitraubendes Einfäden der Leitungen, die alsdann noch mit zahlreichen Anschlüssen im Gehäuseinnern verbunden werden müssen. Im Falle einer Demontage müssen sämtliche Anschlüsse, die in der Regel durch Löten bewirkt werden, wieder umständlich gelöst werden.

Es ist auch bekannt, im Zusammenhang mit derartigen Schutzgehäusen sogenannte Vielfach-Steckkupplungen zu verwenden, die der Atmosphäre ausgesetzt sind. In diesem Falle gibt es jedoch zwei Abdichtprobleme, nämlich einmal zwischen den paarungsfähigen Teilen der Vielfach-Steckkupplung und alsdann zwischen der Steckkupplung und der Rückwand des Schutzgehäuses. Zusätzlich sind derartige der Atmosphäre ausgesetzte Vielfach-Steckverbindungen teuer und platzraubend.

Der Erfindung liegt daher die Aufgabe zugrunde, ein Schutzgehäuse der eingangs beschriebenen Gattung anzugeben, bei dem Montage und Demontage des optischen Geräts in Verbindung mit dem Herstellen und dem Lösen der elektrischen Verbindungen erheblich erleichtert und vereinfacht wird.

Die Lösung der gestellten Aufgabe erfolgt bei dem eingangs beschriebenen Schutzgehäuse erfindungsgemäß dadurch, daß zwischen der Rückwand und dem Gehäusemantel ein Rahmenteil angeordnet ist, an dem der Geräteträger und der Gehäuseträger befestigt sind.

Beim Erfindungsgegenstand ist das Rahmenteil das tragende Element, das den Geräteträger und den Gehäuseträger parallel zueinander zusammenhält. Die Rückwand hat hierbei ihre tragende Funktion verloren und dient nur noch zur Ein- bzw. Durchführung der elektrischen Leitungen und zum Verschluß des Gehäuses an dessen Ende, bzw. auf der dem Frontrahmen und dem Sichtfenster abgekehrten Seite. Soll in einem solchen Falle das Gehäuse mit dem optischen Gerät vom Anbringungsort entfernt werden, so wird zunächst die Rückwand abgeschraubt, wobei das Gehäuse mit dem optischen Gerät am Anbringungsort verbleibt. Durch das Abschrauben der Rückwand wird eine sehr große Öffnung freigelegt, die sowohl das Herstellen als auch das Lösen der elektrischen Verbindungen erleichtert, und zwar unabhängig davon, ob hierbei in der einfachsten Weise eine Art Lüsterklemmen verwendet wird, oder ob man im Gehäuseinnern Vielfach-Steckverbindungen vorsieht.

Eine auch in diesem Fall verwendete Stopf-Buchs-Verschraubung oder ein analoges Durchführungselement braucht hierbei nicht gelöst zu werden, und es entfällt vollständig die Notwendigkeit des Hindurchführens von Kabeln durch eine enge Dichtstelle. Die Verwendung witterungsbeständiger Vielfach-Steckverbindungen ist gleichfalls nicht mehr erforderlich, womit auch die Abdichtungsprobleme innerhalb der Steckverbindung selbst und zwischen Steckverbindung und Gehäuse entfallen. Beim Erfindungsgegenstand bleibt also das Kabel mit der Rückwand verbunden, wobei es möglich ist, die in der Rückwand vorhandene Öffnung durch einen der Rückwand angepaßten Deckel zu verschließen, und zwar mittels der gleichen Schrauben, mit denen auch die Rückwand am Rahmenteil befestigt war. Auf diese Weise wird jegliches Eindringen von Feuchtigkeit und Schmutz in die Rückwand verhindert, solange der übrige Teil des Schutzgehäuses mit dem optischen Gerät demontiert ist. Es ist nach dem Lösen der Rückwand lediglich noch erforderlich, das gesamte Gehäuse mit dem optischen Gerät von der Konsole und/oder vom Schwenk-Neige-Kopf abzunehmen und zu Wartungs- oder Reparaturzwecken in eine Werkstatt zu bringen. Es ist auch dann noch möglich, nach dem Lösen der weiteren Verschraubungen zwischen dem Rahmenteil und dem Gehäusemantel diesen zusammen mit dem Frontrahmen und dem Sichtfenster aus dem Spalt zwischen Geräteträger und Gehäuseträger teleskopartig herauszuziehen, wie dies aus den eingangs genannten Druckschriften bekannt ist. Die Möglichkeit eines einfachen Zerlegens des Gehäuses bleibt also nach wie vor erhalten.

Bei der Montage oder Wiedermontage ist es nach dem Anbringen des komplett bestückten Schutzgehäuses lediglich erforderlich, die mit den Anschlüssen versehene Rückwand mit dem Rahmenteil zu verschrauben und entweder vorher oder beim Aufsetzen der Rückwand die elektrischen Verbindungen herzustellen.

Der Gehäusemantel besteht üblicherweise aus einem Abschnitt eines rohrförmigen Strangprofils, das einen nahezu beliebigen Querschnitt haben kann. Üblicherweise hat ein solcher Gehäusemantel zwei zumindest im wesentlichen parallele Seitenwände, die durch eine nach oben gewölbte Decke und ein nach unten gewölbtes Bodenteil miteinander verbunden sind, wobei auf der Unterseite des Bodenteils Führungselemente für das teleskopartige Herausziehen des Gehäusemantels vorgesehen sind. Der Querschnitt des Gehäusemantels bestimmt natürlich auch zumindest im wesentlichen den Außenumriß des Rahmenteils, und zwar ist dabei die Konstruktion so gewählt, daß die Außenumrisse von Gehäusemantel, Rahmenteil und Rückwand wenigstens an den Seiten und auf der Oberseite des Gehäuses miteinander fluchten.

Während der Gehäusemantel üblicherweise aus einer eloxierten oder lackierten Aluminium-Legierung besteht, wird das Rahmenteil in besonders vorteilhafter Weise aus einem Kunststoff hergestellt, wobei aus Metall bestehende Gewindebuchsen für die Befestigung der Rückwand und des Gehäuseträgers in den Kunststoff eingespritzt sind.

In besonders zweckmäßiger Weise besitzt dabei das Rahmenteil eine Öffnung, die mindestens 40 %, vorzugsweise mindestens 60 % des Außenquerschnitts des Rahmenteils beträgt. Dieser Außenquerschnitt wird durch die Umrißlinie des Rahmenteils bestimmt. Durch diese Öffnung hindurch kann die elektrische Verdrahtung ausgeführt werden, wenn sie beispielsweise mittels einfacher Lüsterklemmen erfolgen soll.

Es ist aber besonders vorteilhaft, dem Rahmenteil auf mindestens einem Teil seines Umfangs einen T-förmigen Querschnitt zu geben, dessen Steg nach innen gerichtet ist. Dieser Steg definiert alsdann eine zur Gehäuseachse senkrecht verlaufende Montageebene für eine am Rahmenteil befestigte auswechselbare Platte. Im Zuge einer weiteren Ausgestaltung der Erfindung sind auf der der Rückwand zugekehrten Seite dieser Platte ein erstes Teil einer Vielfach-Steckvorrichtung und auf der Innenseite der Rückwand ein mit dem ersten Teil paarungsfähiges zweites Teil der Vielfach-Steckvorrichtung angeordnet. In einem solchen Fall wird die elektrische Verbindung durch das Aufsetzen der Rückwand auf das Rahmenteil hergestellt, und mit der Verschraubung der Rückwand werden automatisch die elektrischen Kontakte gesichert.

Es ist weiterhin möglich, den Erfindungsgegenstand mit einer Einrichtung zur Zwangsbelüftung des Schutzgehäuses zu Kühlungszwecken zu versehen. Dies geschieht in besonders einfacher Weise dadurch, daß auf eine entsprechend dimensionierte Öffnung, vorzugsweise auf eine kreisförmige Öffnung in der besagten Platte ein Gebläse aufgesetzt ist, das vorzugsweise ein Axialgebläse ist. Soll die Kühlluft unter Einbeziehung von Umgebungsluft umgewälzt werden, so ist alsdann das Gehäuse mit Lufteintritts- und Luftaustrittsöffnungen zu versehen, die selbstverständlich gegen das Eindringen von Feuchtigkeit und Staub zu schützen sind.

Weitere vorteilhafte Ausgestaltungen des Erfindungsgegenstandes ergeben sich aus den übrigen Unteransprüchen.

Ein Ausführungsbeispiel des Erfindungsgegenstandes wird nachfolgend anhand der Figuren 1 bis 9 näher erläutert.

Es zeigen:
- Figur 1: einen Axialschnitt durch den mittleren und hinteren Teil des Schutzgehäuses,
- Figur 2: eine Explosionsdarstellung des Gegenstandes nach Figur 1,
- Figur 3: eine Innenansicht der Gehäuse-Rückwand in Richtung des Pfeils III in Figur 4,
- Figur 4: einen vertikalen Axialschnitt durch den Gegenstand nach Figur 3 entlang der Linie IV-IV,
- Figur 5: einen Axialschnitt durch eine Baugruppe aus Rückwand und Rahmenteil,
- Figur 6: eine Draufsicht auf das Rahmenteil mit eingesetzter Platte und Gebläse in Richtung des Pfeils VI in Figur 7,
- Figur 7: einen Schnitt durch den Gegenstand von Figur 6 entlang der Linie VII-VII,
- Figur 8: eine Draufsicht auf die Platte mit Steckerleiste in Richtung des Pfeils VIII in Figur 9,
- Figur 9: einen Schnitt durch den Gegenstand von Figur 8 entlang der Linie IX-IX.

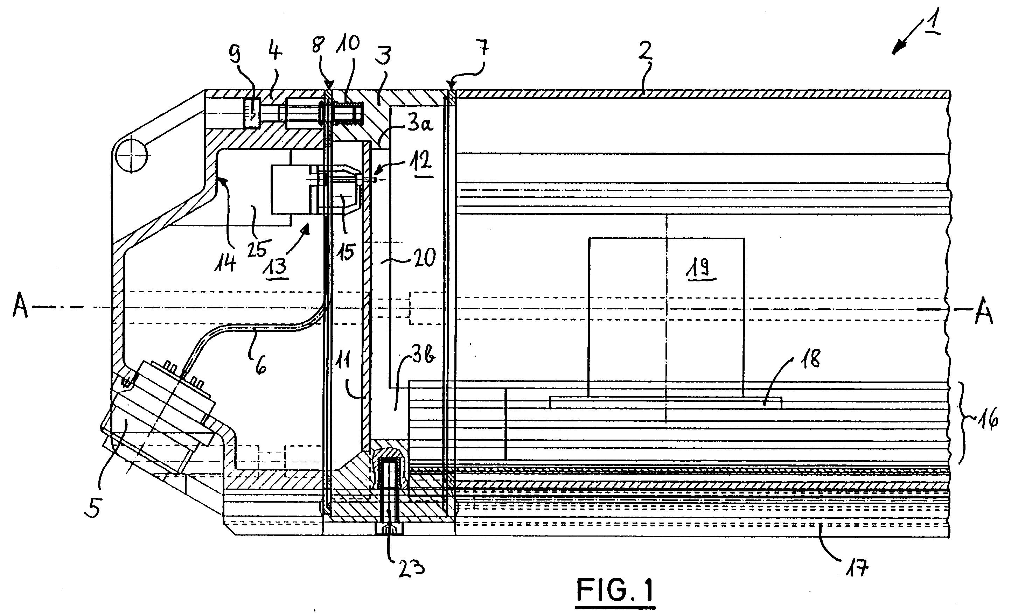

In Figur 1 ist der mittlere und hintere Teil eines Schutzgehäuses 1 für eine Video-Überwachungskamera dargestellt, die jedoch selbst nicht gezeigt ist. Zu diesem Schutzgehäuse gehört ein rohrförmiger Gehäusemantel 2 aus einem Abschnitt eines Leichtmetall-Strangprofils, das erfindungsgemäße Rahmenteil 3 und eine Rückwand 4 mit Mitteln 5 für das Einführen von elektrischen Leitungen 6, von denen nur eine dargestellt ist. Die Teile 2, 3 und 4 sind unter Zwischenschaltung von Dichtungen 7 und 8 wasserdicht miteinander verschraubt, wobei bezüglich der axialen Verschraubung von Rahmenteil 3 und Rückwand 4 nur eine der Schrauben 9 und eine Gewindebuchse 10 dargestellt ist, die in das aus Kunststoff gespritzte Rahmenteil 3 eingebettet ist.

In das Rahmenteil 3 ist eine Platte 11 eingesetzt, die senkrecht zur Gehäuseachse A-A ausgerichtet ist und in ihrem oberen Bereich ein erstes Teil 12 einer Vielfach-Steckvorrichtung 13 trägt. Auf der Innenseite 14 der Rückwand 4 ist ein mit dem ersten Teil 12 paarungsfähiges zweites Teil 15 der Vielfach-Steckvorrichtung 13 befestigt. Es ist erkennbar, daß die Steckverbindung aus den Teilen 12 und 15 lediglich durch Aufsetzen der Rückwand 4 auf das Rahmenteil 3 hergestellt und durch Festziehen der Schrauben 9 gesichert wird.

Am Rahmenteil 3 sind parallel zueinander und mit geringem Abstand ein Geräteträger 16 und ein Gehäuseträger 17 befestigt. Einzelheiten des Geräteträgers sind in der DE-PS 40 08 338 beschrieben: Er besitzt mehrere Einschubebenen, und in eine von diesen ist eine Tragplatte 18 mit einem elektrischen Bauteil 19 eingeschoben. Die daran angeschlossene Video-Kamera ist nicht dargestellt.

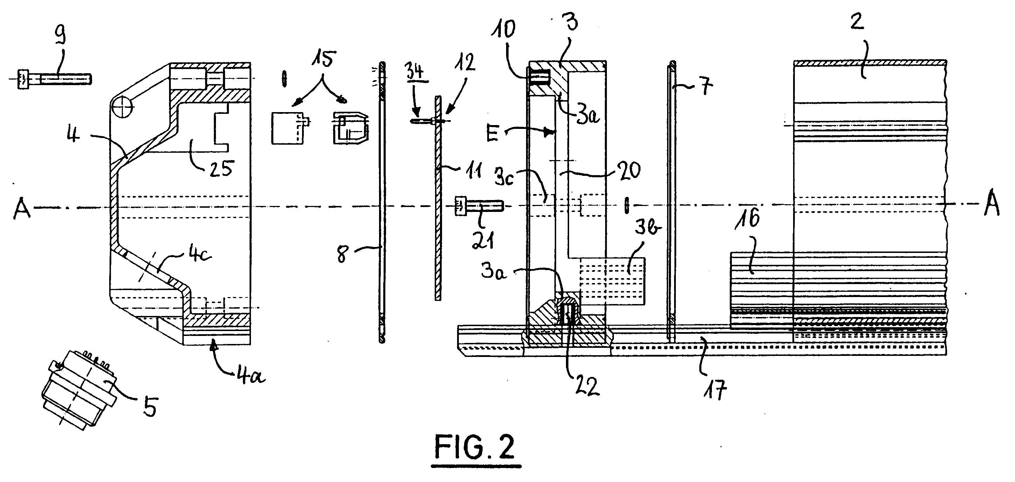

Wie deutlicher aus Figur 2 hervorgeht, besitzt das Rahmenteil 3 einen T-förmigen Querschnitt, dessen Steg 3a nach innen gerichtet ist und eine Öffnung 20 umschließt, die im vorliegenden Falle allerdings durch die geschlossene Platte 11 abgedeckt ist, die auf eine durch den Steg 3a definierte Befestigungsebene E aufgeschraubt ist. Von dem Teil 12 der Vielfach-Steckvorrichtung 13 führen nichtgezeigte Leitungen in das Innere des Gehäusemantels 2.

Wie aus den Figuren 1 und 2 hervorgeht, besitzt das Rahmenteil 3 einen zur Gehäuseachse A-A parallelen Fortsatz 3b, mit dem der im Gehäuseinnern angeordnete Geräteträger 16 fest verbunden ist. Das Rahmenteil 3 ist durch eine Anzahl von Schrauben 21, von denen in Figur 2 nur eine dargestellt ist, über Bohrungen 3c im Rahmenteil 3 mit dem Gehäusemantel 2 verschraubt.

In der Unterseite des Rahmenteils 3 sind zwei weitere Gewindebuchsen 22 angeordnet, über die der Gehäuseträger 17 mittels Schrauben 23 verschraubt ist, von denen in Figur 1 nur eine dargestellt ist.

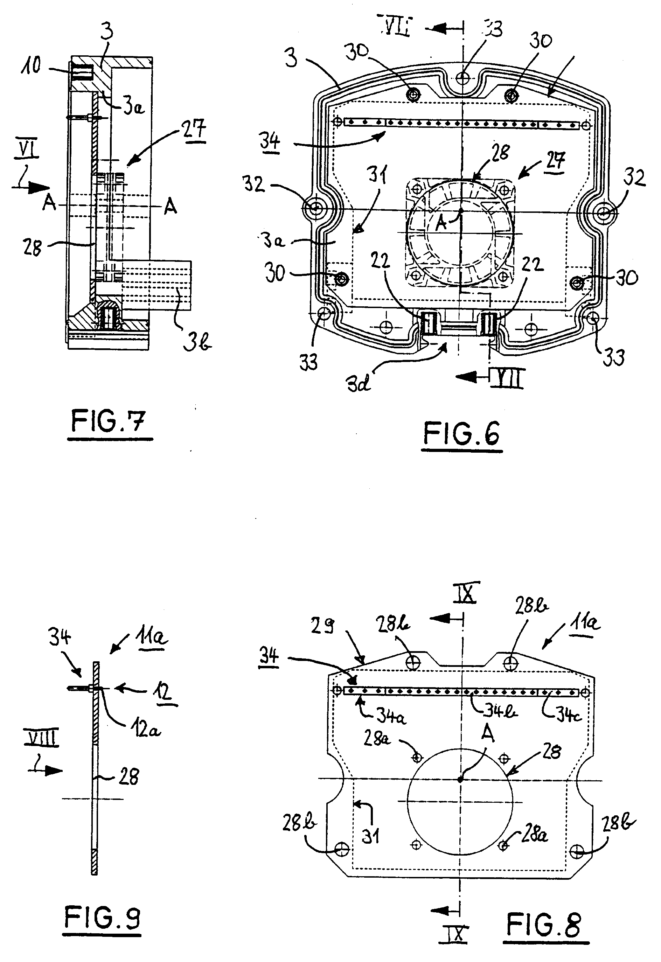

Wie ergänzend aus Figur 6 hervorgeht, besitzt das Rahmenteil 3 an seiner Unterseite eine Schwalbenschwanz-Führung 3d, mittels welcher das Rahmenteil 3 auf den Gehäuseträger 17 aufschiebbar ist. Zu diesem Zweck besitzt der Gehäuseträger 17 einen Querschnitt, der zu der Schwalbenschwanz-Führung 3d komplementär ist. Die beiden Gewindebuchsen 22 des Rahmenteils 3 sind dabei derart auf die Schwalbenschwanz-Führung 3d ausgerichtet, daß der Gehäuseträger 17 innerhalb der Schwalbenschwanz-Führung mit dem Rahmenteil 3 verschraubt ist.

Wie insbesondere aus den Figuren 2, 3 und 4 hervorgeht, besitzt auch die Rückwand 4 auf ihrer Unterseite eine Schwalbenschwanz-Führung 4a, mittels welcher die Rückwand 4 auf den Gehäuseträger 17 aufschiebbar ist.

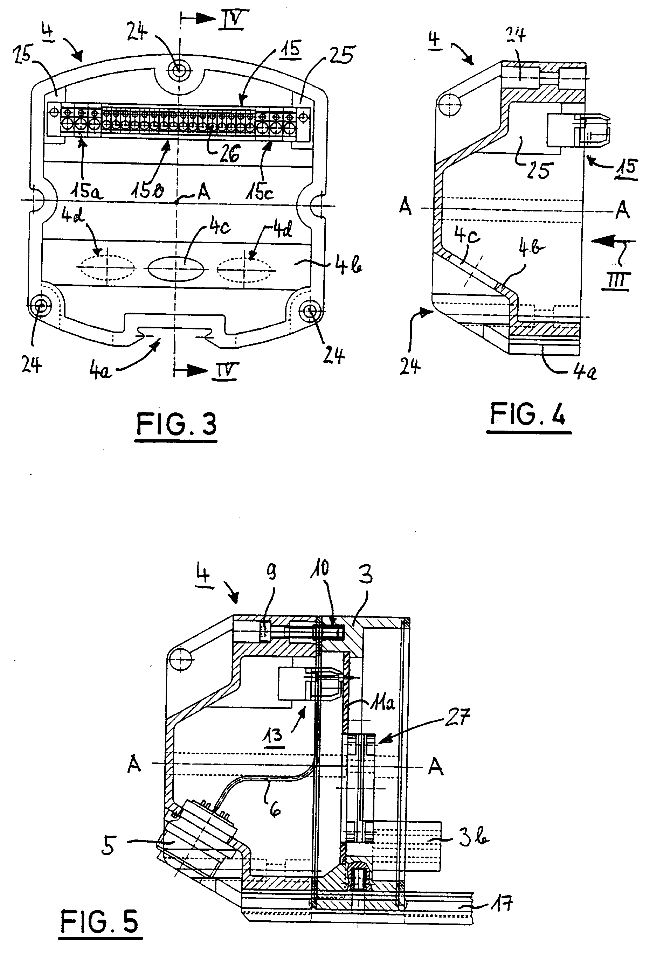

In den Figuren 3 und 4 sind drei Stufenbohrungen 24 für das Hindurchführen von drei Schrauben 9 dargestellt, mit denen die Rückwand 4 mit dem Rahmenteil 3 verschraubt wird. Die Rückwand 4 besitzt weiterhin zwei Vorsprünge 25, auf die das Teil 15 der Vielfach-Steckvorrichtung 13 aufgeschraubt ist. Das Teil 15 der Vielfach-Steckvorrichtung besteht aus drei Abschnitten 15a, 15b und 15c, die zusammen eine Steckbuchsen-Leiste bilden, deren Anschlußkontakte 26 auf der gleichen Seite wie die Steckbuchsen-Leiste und unterhalb derselben angeordnet sind. Die Rückwand 4 besitzt fernerhin in ihrem unteren Bereich einen schräg verlaufenden Wandteil 4b, in dem mittig eine Öffnung 4c für das Einsetzen der Mittel 5 für die Leitungsdurchführung angeordnet ist. Zusätzlich können beiderseits der Öffnung 4c weitere Öffnungen 4d angeordnet sein, die in Figur 3 nur gestrichelt dargestellt sind.

Figur 5 zeigt die bauliche Vereinigung einer Rückwand 4 nach Figur 4 mit dem Rahmenteil, das allerdings eine besonders ausgebildete Platte 11a besitzt, auf die ein Gebläse 27 aufgeschraubt ist. Weitere Einzelheiten dieser Weiterbildung ergeben sich aus den Figuren 6 bis 9.

In den Figuren 8 und 9 ist zunächst die Platte 11a dargestellt, die eine kreisförmige Öffnung 28 besitzt, auf die das Gebläse 27 mittels der Bohrungen 28a aufgeschraubt ist. Figur 8 zeigt die besondere Form der Umrißlinie 29, die so gewählt wurde, daß die Platte 11a, und analog auch die Platte 11, in den Rahmenteil 3 eingesetzt und auf der Befestigungsebene E des Steges 3a festgeschraubt werden kann, und zwar mittels der Bohrungen 28b (Figur 8) und der Schrauben 30 (Figur 6). In den Figuren 6 und 8 ist noch gestrichelt die umlaufende Innenkante 31 des Steges 3a dargestellt. Durch diese Innenkante 31 wird der Querschnitt der Öffnung 20 definiert. Zur Verbindung des Rahmenteils 3 mit dem Gehäusemantel 2 dienen Stufenbohrungen 32, durch die zwei der Schrauben 21 hindurchgeführt sind. Für die Befestigung der Rückwand 4 mittels dreier Schrauben 9 an der Rückwand 4 besitzt diese drei Gewindebohrungen 33, die durch die bereits beschriebenen Gewindebuchsen 10 gebildet werden.

Die in den Figuren 7 bis 9 dargestellte Platte 11a trägt ebenso wie die in den Figuren 1 und 2 dargestellte Platte 11 das erste Teil 12 der Vielfach-Steckvorrichtung 13, und zwar wird dieses Teil aus einer Steckerleiste 34 gebildet, die analog der Steckbuchsen-Leiste des Teils 15 aus drei Teilen 34a, 34b und 34c besteht. Die einzelnen Stecker dieser Steckerleiste 34 besitzen Anschlußkontakte 12a, die als Lötkontakte ausgebildet sind, und auf der der Rückwand 4 abgekehrten Seite der Platte 11a angeordnet sind. Analoge Verhältnisse gelten auch für die Platte 11. Die von diesen Anschlußkontakten 12a zu den elektrischen Bauteilen der Gesamtanordnung führenden Leitungen sind der Einfachheit halber nicht dargestellt. Es kann sich aber auch um Leiterbahnen mit Gegensteckern handeln, wenn die Platte 11, 11a als Leiterplatte ausgebildet ist.

Durch die Anbringung des Gebläses 27 auf der Platte 11a erhält diese Platte die Funktion eines Schotts, so daß im Schutzgehäuse eine geführte Luftströmung entsteht, und zwar unter der Voraussetzung, daß das Schutzgehäuse mit den bereits weiter oben beschriebenen Ein- und Austrittsöffnungen versehen ist. Hierdurch kann die Kühlung wesentlich verbessert werden, die beispielsweise dann erforderlich ist, wenn es sich um hochbelastete elektrische Bauteile handelt und/oder das Schutzgehäuse der Sonnenstrahlung ausgesetzt ist. Bei dem Gebläse 27 handelt es sich um ein Axialgebläse an sich bekannter Bauart.

## Patentansprüche

1. Schutzgehäuse für optische Geräte, insbesondere für Video-Überwachungskameras, mit einem rohrförmigen Gehäusemantel (2), einer Rückwand (4) mit Mitteln (5) für die Ein- oder Durchführung von elektrischen Leitungen (6), mit einem inneren Geräteträger (16) und mit einem äußeren Gehäuseträger (17), die oberhalb und unterhalb des Gehäusemantels (2) in einem festen Abstand parallel zueinander gehalten sind, **dadurch gekennzeichnet**, daß zwischen der Rückwand (4) und dem Gehäusemantel (2) ein Rahmenteil (3) angeordnet ist, an dem der Geräteträger (16) und der Gehäuseträger (17) befestigt sind.

2. Schutzgehäuse nach Anspruch 1, **dadurch gekennzeichnet**, daß die Außenumrisse von Gehäusemantel (2), Rahmenteil (3) und Rückwand (4) wenigstens an den Seiten und auf der Oberseite des Schutzgehäuses (1) miteinander fluchten.

3. Schutzgehäuse nach Anspruch 1, **dadurch gekennzeichnet**, daß das Rahmenteil (3) aus einem Kunststoff besteht und daß aus Metall bestehende Gewindebuchsen (10, 22) für die Befestigung der Rückwand (4) und des Gehäuseträgers (17) in den Kunststoff eingespritzt sind.

4. Schutzgehäuse nach Anspruch 1, **dadurch gekennzeichnet**, daß das Rahmenteil (3) eine Öffnung (20) mit einer Innenkante (31) aufweist, welche Öffnung (20) mindestens 40 %, vorzugsweise mindestens 60 %, des Außenquerschnittes des Rahmenteils beträgt.

5. Schutzgehäuse nach Anspruch 4, **dadurch gekennzeichnet**, daß das Rahmenteil (3) auf mindestens einem Teil seines Umfangs einen T-förmigen Querschnitt aufweist, dessen Steg (3a) nach innen gerichtet ist.

6. Schutzgehäuse nach Anspruch 1, **dadurch gekennzeichnet**, daß das Rahmenteil (3) auf seiner Unterseite eine Schwalbenschwanz-Führung (3d) aufweist, mittels welcher das Rahmenteil (3) auf den Gehäuseträger (17) aufschiebbar ist.

7. Schutzgehäuse nach den Ansprüchen 3 und 6, **dadurch gekennzeichnet**, daß mindestens eine der Gewindebuchsen (22) des Rahmenteils (3) derart auf die Schalbenschwanz-Führung (3d) ausgerichtet ist, daß der Gehäuseträger (17) innerhalb der Schwalbenschwanz-Führung mit dem Rahmenteil (3) verschraubt ist.

8. Schutzgehäuse nach Anspruch 1, **dadurch gekennzeichnet**, daß das Rahmenteil (3) einen zur Gehäuseachse (A-A) parallelen Fortsatz (3b) aufweist, mit dem der Gehäuseträger (16) formschlüssig verbunden ist.

9. Schutzgehäuse nach Anspruch 4, **dadurch gekennzeichnet**, daß im Rahmenteil (3) eine auswechselbare Platte (11, 11a) befestigt ist.

10. Schutzgehäuse nach Anspruch 9, **dadurch gekennzeichnet**, daß die Platte (11, 11a) mindestens eine Öffnung für das Durchführen elektrischer Leitungen (6) aufweist.

11. Schutzgehäuse nach Anspruch 9, **dadurch gekennzeichnet**, daß auf der der Rückwand (4) zugekehrten Seite der Platte (11, 11a) ein erstes Teil (12) einer Vielfach-Steckvorrichtung (13) und auf der Innenseite (14) der Rückwand (4) ein mit dem ersten Teil (12) paarungsfähiges zweites Teil (15) der Vielfach-Steckvorrichtung (13) angeordnet sind.

12. Schutzgehäuse nach Anspruch 11, **dadurch gekennzeichnet**, daß das erste Teil (12) der Vielfach-Steckvorrichtung (13) mindestens eine Steckerleiste (34) ist, deren Anschlußkontakte (12a) auf der der Rückwand (4) abgekehrten Seite der Platte (11, 11a) angeordnet sind.

13. Schutzgehäuse nach Anspruch 12, **dadurch gekennzeichnet**, daß das zweite Teil (15) der Vielfach-Steckvorrichtung (13) mindestens eine Steckbuchsen-Leiste ist, deren Anschlußkontakte (26) auf der gleichen Seite wie die Steckbuchsen-Leiste und unterhalb derselben angeordnet sind.

14. Schutzgehäuse nach Anspruch 10, **dadurch gekennzeichnet**, daß auf eine Öffnung (28) in der Platte (11a) ein Gebläse (27) aufgesetzt ist.

15. Schutzgehäuse nach Anspruch 1, **dadurch gekennzeichnet**, daß die Rückwand (4) auf ihrer Unterseite eine Schwalbenschwanz-Führung (4a) aufweist, mittels welcher die Rückwand (4) auf den Gehäuseträger (17) aufschiebbar ist.

## Claims

1. Protective housing for optical apparatuses, in particular video surveillance cameras, comprising a tubular housing shell (2), a rear wall (4) with means (5) for inserting or passing through electrical wires (6), with an inner apparatus support (16) and with an outer housing support (17) which are held above and below the housing shell (2) at a fixed distance parallel to each other, **characterised in that** between the rear wall (4) and the housing shell (2) is arranged a frame element (3) onto which is mounted the apparatus support (16) and the housing support (17).

2. Protective housing according to Claim 1, **characterised in that** the outlines of housing shell (2), frame element (3) and rear wall (4) are flush relative to each other at least at the sides and at the top of the protective housing (1).

3. Protective housing according to Claim 1, **characterised in that** the frame element (3) is made of a plastic material, and threaded metal bushes (10, 22) for mounting the rear wall (4) and the housing support (17) are injected into the plastic material.

4. Protective housing according to Claim 1, **characterised in that** the frame element (3) comprises an opening (20) with an inside edge (31), and the opening (20) is at least 40%, preferably at least 60%, of the outside cross-section of the frame element.

5. Protective housing according to Claim 4, **characterised in that** the frame element (3) has on at least a portion of its circumference a T-shaped cross-section the protrusion (3a) of which is oriented inwards.

6. Protective housing according to Claim 1, **characterised in that** the frame element (3) has on its lower side a dovetail guide (3d) by means of which the frame element (3) can be pushed onto the housing support (17).

7. Protective housing according to Claims 3 and 6, **characterised in that** at least one of the threaded bushes (22) of the frame element (3)is oriented towards the dovetail guide (3d) in such a manner that the housing support (17) is bolted onto the frame element (3) within the dovetail guide.

8. Protective housing according to Claim 1, **characterised in that** the frame element (3) comprises an extension (3b) parallel to the housing axis (A-A) to which the housing support (16) is positively joined.

9. Protective housing according to Claim 4, **characterised in that** an exchangeable plate (11, 11a) is mounted in the frame element (3).

10. Protective housing according to Claim 9, **characterised in that** the plate (11, 11a) comprises at least one opening for passing through electrical wires (6).

11. Protective housing according to Claim 9, **characterised in that** on the side of the plate (11, 11a) which is facing the rear wall (4) is arranged a first part (12) of a multiple plugging device (13), and on the inside (14) of the rear wall (4) is arranged a second part (15) of the multiple plugging device (13) which can be paired with the first part (12).

12. Protective housing according to Claim 11, **characterised in that** the first part (12) of the multiple plugging device (13) is at least a plug array (34) the connecting contacts (12a) of which are configured on the side of the plate (11, 11a) facing away from the rear wall (4).

13. Protective housing according to Claim 12, **characterised in that** the second part (15) of the multiple plugging device (13) is at least a socket array the connecting contacts (26) of which are arranged on the same side as the socket array and below thereof.

14. Protective housing according to Claim 10, **characterised in that** a blower (27) is placed onto an opening (28) in the plate (11).

15. Protective housing according to Claim 1, **characterised in that** the rear wall (4) comprises on its lower side a dovetail guide (4a) by means of which the rear wall (4) is pushed onto the housing support (17).

## Revendications

1. Boîtier de protection pour des appareils optiques, notamment pour des caméras vidéo de surveillance, comportant une enveloppe de forme tubulaire (2) de boîtier, une paroi arrière (4) équipée de moyens (5) pour l'introduction ou le passage de conducteurs électriques (6), un support intérieur (16) des appareils et un support extérieur (17) du boîtier, qui sont retenus parallèlement l'un à l'autre à une distance fixe au-dessus et au-dessous de l'enveloppe (2) du boîtier, caractérisé en ce qu'entre la paroi arrière (4) et l'enveloppe (2) du boîtier est disposé un élément de cadre (3) sur lequel sont fixés le support (16) des appareils et le support (17) du boîtier.

2. Boîtier de protection selon la revendication 1, caractérisé en ce que les contours extérieurs de l'enveloppe (2) du boîtier, de l'élément de cadre (3) et de la paroi arrière (4) sont alignés entre eux au moins au niveau des côtés et sur le côté supérieur du circuit de protection (1).

3. Boîtier de protection selon la revendication 1, caractérisé en ce que l'élément de cadre (3) est constitué par une matière plastique et que des douilles filetées métalliques (10,22) pour la fixation de la paroi arrière (4) et du support (17) du boîtier sont enrobées par injection dans la matière plastique.

4. Boîtier de protection selon la revendication 1, caractérisé en ce que l'élément de cadre (3) comporte une ouverture (20) possédant un bord intérieur (31), laquelle ouverture (20) correspond à au moins 40 % et de préférence à au moins 60 % de la section transversale extérieure de l'élément de cadre.

5. Boîtier de protection selon la revendication 4, caractérisé en ce que l'élément de cadre (3) possède, sur au moins une partie de sa périphérie, une section transversale en forme de T, dont la barrette (3a) est dirigée vers l'intérieur.

6. Boîtier de protection selon la revendication 1, caractérisé en ce que l'élément de cadre (3) comporte, sur sa face inférieure, un guide en queue d'aronde (3d), à l'aide duquel l'élément de cadre (3) peut être emmanché sur le support (17) du boîtier.

7. Boîtier de protection selon les revendications 3 et 6, caractérisé en ce qu'au moins l'une des douilles filetées (22) de l'élément de cadre (3) est alignée sur le guide en queue d'aronde (3d) de telle sorte que le support (17) du boîtier est vissé à l'intérieur du guide en queue d'aronde à l'élément de cadre (3).

8. Boîtier de protection selon la revendication 1, caractérisé en ce que l'élément de cadre (3) comporte un prolongement (3b) parallèle à l'axe (A-A) du boîtier et au moyen duquel le support (16) du boîtier est relié par formes complémentaires.

9. Boîtier de protection selon la revendication 4, caractérisé en ce qu'une plaque interchangeable (11,11a) est fixée dans l'élément de cadre (3).

10. Boîtier de protection selon la revendication 9, caractérisé en ce que la plaque (11,11a) possède au moins une ouverture pour le passage de conducteurs électriques (6).

11. Boîtier de protection selon la revendication 9, caractérisé en ce qu'une première partie (12) d'un dispositif de connexion multiple (13) est disposée sur le côté de la plaque (11,11a) tourné vers la paroi arrière (4) et qu'une seconde partie (4), pouvant être appariée à la première partie (12), du dispositif de connexion multiple (13) est disposée sur le côté intérieur (14) de la paroi arrière (4).

12. Boîtier de protection selon la revendication 11, caractérisé en ce que la première partie (12) du dispositif de connexion multiple (13) est au moins une barrette de connecteurs (34), dont les contacts de raccordement (12a) sont disposés sur le côté de la plaque (11,11a), tourné à l'opposé de la paroi arrière (4).

13. Boîtier de protection selon la revendication 12, caractérisé en ce que la seconde partie (15) du dispositif de connexion multiple (13) est au moins une barrette de douilles d'enfichage, dont les contacts de raccordement (26) sont disposés sur le même côté que la barrette de douilles d'enfichage et au-dessous de cette dernière.

14. Boîtier de protection selon la revendication 10, caractérisé en ce qu'un ventilateur (27) est monté dans une ouverture (28) formée dans la plaque (11a).

15. Boîtier de protection selon la revendication 1, caractérisé en ce que la paroi arrière (4) possède, sur sa face intérieure, un guide en queue d'aronde (4a), à l'aide duquel la paroi arrière (4) peut être emmanchée sur le support (17) du boîtier.
